# EUROPÄISCHE PATENTANMELDUNG

(11) **EP 1 333 010 A2**
(43) Veröffentlichungstag der Anmeldung: **06.08.2003**
(21) Anmeldenummer: 03001063.1
(22) Anmeldetag: 18.01.2003
(51) Int. Cl.: C03B 5/167, C03B 5/42

(54) **Verfahren und Vorrichtung zum Behandeln eines Bauteiles, das für eine Anlage zum Erzeugen oder Aufbereiten von Glasschmelzen bestimmt ist**

(30) Priorität: 30.01.2002 DE 10203660
(71) Anmelder: Schott Glas, 55122 Mainz (DE); OMG AG & KG, 63457 Hanau-Wolfgang (DE)
(72) Erfinder: Dick, Erhard, 95701 Pechbrunn (DE); Fischer, Erich, 95666 Mitterteich (DE); Fuchs, Roland, 95666 Leonberg (DE); Riedl, Markus, 95666 Mitterteich (DE); Oechsle, Michael, 63755 Alzenau (DE); Reber, Gerhard, 63571 Gelnhausen (DE); Udo, Thomas, 63584 Gründau (DE)
(74) Vertreter: Weitzel, Wolfgang, Dr.-Ing.

(57) **Zusammenfassung**

Die Erfindung betrifft ein Verfahren zum Behandeln eines Bauteiles, das für eine Anlage zum Erzeugen oder Aufbereiten von Glasschmelzen bestimmt ist und Oberflächen aufweist, die aus Edelmetall bestehen und im Betrieb von Glasschmelze berührt sind.

Die Erfindung ist gekennzeichnet durch die folgenden Merkmale:
das Bauteil wird vor seiner Inbetriebnahme während einer gewissen Zeitspanne einer oxidierenden Atmosphäre ausgesetzt.

## Beschreibung

Die Erfindung betrifft das Gebiet der Erzeugung oder Aufbereitung von Glasschmelzen.

Glasschmelzen werden aus anorganischen Verbindungen hergestellt, insbesondere aus Glasscherben oder sogenanntem Gemenge.

Es sind zahlreiche Vorrichtungen bekanntgeworden, mit denen die genannten Materialien erschmolzen oder geläutert werden können. Siehe zum Beispiel DE 33 16 546 C1. Dabei handelt es sich um einen sogenannten Skulltiegel.

Dem Schmelzprozeß muß sich in der Regel ein Läuterprozeß anschließen. Dabei hat das Läutern die Aufgabe, das erschmolzene Glas von physikalisch und chemisch gebundenen Gasen zu befreien.

Dabei werden alle Anstrengungen unternommen, um die Entgasung möglichst vollständig durchzuführen. So werden beim Läutervorgang Läutermittel eingesetzt und besonders hohe Temperaturen von bis zu 2000° C angewandt.

In der Praxis hat sich gezeigt, daß trotz größter Anstrengungen in der Läuterstufe Blasen in der Glasschmelze auftreten. Wie man weiß, geht dies darauf zurück, daß in der Schmelze örtlich Temperaturgradienten vorliegen, die zur Bildung von Lokalelementen führen und damit zum Entstehen von weiteren Gasblasen, die man "Sekundärblasen" nennt. Siehe EP 1 050 513 A3.

Weitere Druckschriften, die sich mit dem Phänomen von Blasenbildung befassen, sind die folgenden:
- Cowan J.H, Platinum Glass Reactions, Ceramic Proceedings 1982, S. 218-228
- Cowan J.H., An Electrochemical Theory for Oxygen Reboil, Journal of the American Ceramic Society 1966, S. 559-562
- Onishi, Reboil Phenomenon at the borosilicate-glass-platinuminterface, 10. Int. Congress on Glass, Kyoto 1974, S. 63-70
- Shinji, Kawachi; Yoshio, Iwatsubo, Diagnosis and Treatment of Bubbles, Glass 2000, S. 122-129
- DE 198 56 797 A1
- JP 2982959
- US 3 387 961
- US 5 385 595
- US 4 123 263
- WO 0818731
- EP 559330
- JP 56129618
- EP 967179
- EP 908417
- JP 02221129

Es ist bekannt, daß es an der Oberfläche von Platin, im Kontakt mit Borosilikatglas zur Blasenbildung kommt (Onishi, Fujij 1974). Weiterhin ist es bekannt, daß der Vorgang auf elektrochemischen Mechanismen beruht (US 427934 und Cowan, Buehl, et al. 1966).

NH Technoglass beschreibt den Einsatz von Platin mit geringen OS-Verunreinigungen zur Vermeidung von Blasen, eine Auslagerung wird nicht aufgezeigt (DE 198 56 797 bzw. JP 2982959).Kritik am Stand der Technik:

Die beschriebenen Theorien und Ausführungen zeigen jedoch nur das Phänomen auf; eine Lösung durch geeignete Legierungswahl wird nicht vorgegeben. Dabei ist eine Blasenbildung bei jenen Schmelzen nicht akzeptabel, aus welchen optische Gläser, LCD-Gläser sowie technische Gläser erzeugt werden sollen. Die notwendigen Qualitätskriterien werden hiermit nicht erreicht.

Der Erfindung liegt die Aufgabe zugrunde, Bauteile der genannten Art derart zu behandeln, daß eine Blasenbildung vermieden oder derart unterdrückt wird, daß die notwendigen Qualitätsanforderungen erfüllt werden.

Diese Aufgabe wird durch die Merkmale von Anspruch 1 gelöst. Demgemäß wird das Bauteil vor seiner Inbetriebnahme in der genannten Anlage zum Erzeugen oder Aufbereiten von Glasschmelze während einer gewissen Zeitspanne in einer oxidierenden Atmosphäre einer erhöhten Temperatur ausgesetzt, d.h. einer Temperatur oberhalb Raumtemperatur, gegebenenfalls auch über der Betriebstemperatur.

Die Erfinder haben folgendes erkannt: Durch die genannte Behandlung werden organische Verunreinigungen zersetzt. Oxidische Verunreinigungen verdampfen durch den hohen Zersetzungsdruck oder bilden stabile Schichten. Diese Schichten besitzen eine geringere Diffusionsneigung gegenüber Wasserstoff, verglichen mit reinen Metallen. Wenn aber Wasserstoff nicht in die Schicht hinein diffundieren kann, so bleibt auch kein Sauerstoff zurück, welcher zur Bildung der genannten Sekundärblasen führt. Dies bedeutet, daß durch die Anwendung der Erfindung das Bilden von Blasen in der Glasschmelze stark reduziert wird, und daß sich qualitativ hochwertige Gläser herstellen lassen.

Die Ausdrucksweise "Bauteil" beinhaltet jegliche Bauteile, die Bestandteil einer Anlage zum Erzeugen oder zum Aufbereiten von Glasschmelzen sein können. Es kommen somit Rohre in Betracht, Rohrkrümmer, Behälter, Rührer und anderes mehr. Dabei muß nicht das gesamte Bauteil aus Edelmetall bestehen, es gibt zahlreiche Fälle, in denen das betreffende Bauteil nur teilweise mit Edelmetall beschichtet ist, und wobei die Edelmetalloberflächen im Betrieb von Glasschmelze berührt sind.

Grundsätzlich kann man bei Auskleidungswerkstoffen aus Platin und dessen Legierungen vier Blasenarten im Glas unterscheiden:
- Blasentyp I:: Organische Verunreinigungen der Oberfläche (CO, CO2)
Beobachtungszeitraum: Mehrere Tage
- Blasentyp II:: Leckage der Auskleidung (Edelgase, O2, ...)
Beobachtungszeitraum: Fortlaufend
- Blasentyp III:: Verunreinigungen (Oxide) im Edelmetall (O2)
Beobachtungszeitraum: Mehrere Tage bis Wochen
- Blasentyp IV:: Gebundene Hydroxylgruppen im Glas (O₂)
Beobachtungszeitraum: Fortlaufend

Eine Möglichkeit, Blasentyp I und III an einem Glasschmelzofen zu vermeiden, stellt die Behandlung von Bauteilen, Halbzeug oder Beschichtungen aus Platin und dessen Legierungen dar.

Hierzu werden die Bauteile, das Halbzeug oder die Beschichtungen bei einer Temperatur, die um 100 K oberhalb der Anwendungstemperatur liegt, für 400 h in einem Umluftofen behandelt.

Die mit der Erfindung erzielten Vorteile bestehen insbesondere darin, daß bereits nach dem Einbau der Bauteile mit der blasenreduzierten Produktion begonnen werden kann.

Weiterhin rägt die vorliegende Erfindung dazu bei, die Qualität von qualitativ hochwertigen Gläsern zu steigern.

### Ausführungsbeispiele:

### Beispiel 1:

Im Labormaßstab sind Labortiegel (Größe 106) aus den Legierungen Pt (3N), PtRh10, FKS 16Pt, FKS 16PtRh10 und FKS 16PtAu5 hergestellt worden.

Je ein Tiegel wurde 400 Stunden bei 1.200° C und bei 1.450° C in einem Standard-Umluftofen behandelt.

Die Tiegel wurden im kalten Zustand mit Borosilikatglas-Scherben gefüllt. Der Glastest erfolgte durch Aufheizen auf Verarbeitungstemperatur, einer Haltezeit von 24 h sowie der Abkühlung in der Ofenhitze.

Während die bei 1.200° C behandelten Proben deutlich Blasen aufweisen, konnte bei den bei 1.450° C geglühten Proben keine Blasenbildung nachgewiesen werden.

### Beispiel 2:

Zirkonmullit Stabproben wurden durch Thermisches Spritzen mit einer Schichtdicke von 200 µm bis 1.500 µm beschichtet.

je Schichtdicke wurde je eine Probe 400 Stunden bei 1.200° C und bei 1.450° C in einem Standard-Umluftofen behandelt.

Die Stabproben wurden bei Arbeitstemperatur in einen Borosilikatglas Scherben gefüllt Tiegel eingebracht. Der Glastest erfolgte nach dem Einbringen der Proben in die Glasschmelze bei der Verarbeitungstemperatur, einer Haltezeit von 24 h sowie der Abkühlung in der Ofenhitze.

Während die bei 1.200° C behandelten Proben deutlich Blasen aufweisen, konnte bei den bei 1.450° C geglühten Proben keine Blasenbildung nachgewiesen werden.

Weitere Varianten des erfindungsgemäßen Verfahrens sind denkbar. So kann die Temperatur während der Behandlung verändert werden. Beispielsweise kann sie während einer Anfangsphase der Behandlungsdauer sehr hoch sein und sodann abnehmen, oder umgekehrt während einer Anfangsphase gering sein und im Laufe der Behandlungsdauer ansteigen.

Auch ist es möglich, während der Behandlung das Bauteil mit einem Strom aus oxidierendem Gas zu beaufschlagen. Dieser Gasstrom kann gezielt auf gewisse Teile gerichtet werden, die im Betrieb mit Glasschmelze in Berührung gelangen.

Entsprechend dem erfindungsgemäßen Verfahren schlagen die Erfinder eine erfindungsgemäße Vorrichtung vor. Diese umfaßt eine Kammer, die zum Aufnehmen der zu behandelnden Bauteile bestimmt ist. Die Kammer läßt sich entsprechend aufheizen. Außerdem weist die Kammer einen Anschluß zum Einleiten eines oxidierenden Gases auf.

## Patentansprüche

1. Verfahren zum Behandeln eines Bauteiles, das für eine Anlage zum Erzeugen oder Aufbereiten von Glasschmelzen bestimmt ist und Oberflächen aufweist, die aus Edelmetall bestehen und im Betrieb von Glasschmelze berührt sind, **gekennzeichnet durch** die folgenden Merkmale:
1.1 das Bauteil wird vor seiner Inbetriebnahme während einer gewissen Zeitspanne einer oxidierenden Atmosphäre ausgesetzt.

2. Verfahren nach Anspruch 1, **dadurch gekennzeichnet, daß** das Bauteil während der genannten Zeitspanne einer erhöhten Temperatur ausgesetzt wird.

3. Verfahren nach Anspruch 2, **dadurch gekennzeichnet, daß** die Temperatur über der Betriebstemperatur des Bauteiles liegt.

4. Verfahren nach Anspruch 3, **dadurch gekennzeichnet, daß** die Temperatur zwischen 1.000° C und 2.000° C liegt.

5. Verfahren nach Anspruch 4, **dadurch gekennzeichnet, daß** die Temperatur zwischen 1.100° C und 1.500° C liegt.

6. Verfahren nach einem der Ansprüche 1 bis 5, **dadurch gekennzeichnet, daß** die Zeitspanne zwischen 1 und 500 Stunden liegt.

7. Verfahren nach Anspruch 6, **dadurch gekennzeichnet, daß** die Zeitspanne zwischen 100 und 500 Stunden liegt.

8. Verfahren nach einem der Ansprüche 1 bis 7, **dadurch gekennzeichnet, daß** die Temperatur während der Behandlung des Bauteiles verändert wird.

9. Verfahren nach Anspruch 8, **dadurch gekennzeichnet, daß** die Temperatur während einer ersten Behandlungsphase hoch, und während einer zweiten Behandlungsphase niedrig ist oder daß die Temperatur während einer ersten Behandlungsphase niedrig und während einer zweiten Behandlungsphase hoch ist.

10. Verfahren nach einem der Ansprüche 1 bis 9, **dadurch gekennzeichnet, daß** das Bauteil wenigstens während eines Teiles der Behandlungsdauer mit einem oxidierenden Gas beaufschlagt wird.

11. Vorrichtung zum Behandeln eines Bauteiles, das für eine Anlage zum Erzeugen oder Aufbereiten von Glasschmelzen bestimmt ist und Oberflächen aufweist, die aus Edelmetall bestehen und im Betrieb von Glasschmelze berührt sind, **gekennzeichnet durch** eine Behandlungskammer, die das Bauteil aufnimmt und in der eine erhöhte Temperatur einstellbar ist.

12. Vorrichtung nach Anspruch 11, **dadurch gekennzeichnet, daß** die Temperatur in der Kammer auf einen Wert einstellbar ist, der über Raumtemperatur oder über der Betriebstemperatur liegt.

13. Vorrichtung nach Anspruch 11 oder 12, **dadurch gekennzeichnet, daß** die Kammer einen Einlaß zum Aufbringen eines oxidierenden Gases aufweist.
